# EUROPEAN PATENT APPLICATION

(11) **EP 2 528 001 A2**
(43) Date of publication of application: **28.11.2012**
(21) Application number: 12169666.0
(22) Date of filing: 25.05.2012
(51) Int. Cl.: G06F 17/50

(54) **Wiring diagram visualization system**

(30) Priority: 26.05.2011 US 201113116198
(71) Applicant: The Boeing Company, Chicago, IL 60606-2016 (US)
(72) Inventor: Rosman Lafever, Monica C., Renton, WA Washington 98056 (US); Eames, Patrick J., Newcastle, WA Washington 98056 (US); Hadley, Brent Louis, Kent, WA Washington 98042 (US)
(74) Representative: Howson, Richard G.B.

(57) **Abstract**

A method and apparatus for displaying wiring information. A first view of a wiring system is displayed in which logical components are displayed in the first view. A second view of the wiring system is displayed in which physical components in the wiring system are displayed in the second view. Responsive to a user input to a display of the wiring system in one view from the first view and the second view, a reaction in another view other than the one view from the first view and the second view is displayed based on the user input to the display of the wiring system.

## Description

### BACKGROUND INFORMATION

### 1. Field:

The present disclosure relates generally to wiring diagrams and, in particular, to displaying wiring diagrams. Still more particularly, the present disclosure relates to a method and apparatus for displaying multiple views of wiring systems in wiring diagrams.

### 2. Background:

Structures such as aircraft may have hundreds of miles of wiring in a wiring system. The wiring system may be used to carry power and data to different components in a wiring system in the aircraft. These components may include computers, lights, displays, and other suitable types of devices.

Diagrams illustrating representations of these wiring systems are referred to as schematic diagrams. Schematic diagrams include multiple components. For example, with aircraft, electrical wiring diagrams are used to illustrate all of the conductive paths between various components in the aircraft.

A schematic diagram is typically presented in a hard copy form which may have multiple pages of drawings. In some cases, the schematic diagrams may be depicted in electronic form. These drawings contain large amounts of information about the components in the drawings. These diagrams may include references to other sheets.

Using hardcopy sheets of drawings are very time-consuming and may be difficult for users, such as maintenance personnel. The difficulty may increase when more than one component is referenced, and those components are located on different sheets in the schematic diagram.

For example, maintenance personnel may inspect the wiring in the aircraft. The maintenance personnel may also replace and install wires. In performing maintenance, the inspection of the wiring is often made with the aide of schematic diagrams.

Thus, the different advantageous embodiments take into account at least one of the issues discussed above, as well as possibly other issues.

### SUMMARY

In one advantageous embodiment, a method for displaying wiring information is provided. A first view of a wiring system is displayed in which logical components are displayed in the first view. A second view of the wiring system is displayed in which physical components in the wiring system are displayed in the second view. Responsive to a user input to a display of the wiring system in one view from the first view and the second view, a reaction in another view other than the one view from the first view and the second view is displayed based on the user input to the display of the wiring system.

In another advantageous embodiment, an apparatus comprises a computer system. The computer system is configured to display a first view of a wiring system in which logical components are displayed in the first view. The computer system is further configured to display a second view of the wiring system in which physical components in the wiring system are displayed in the second view. Responsive to a user input to a display of the wiring system in one view from the first view and the second view, the computer is system is configured to display a reaction in another view other than the one view from the first view and the second view based on the user input to the display of the wiring system.

In yet another advantageous embodiment, a computer program product comprises a computer readable storage medium, first program code, second program code, and third program code. The first program code is for displaying a first view of a wiring system in which logical components are displayed in the first view. The second program code is for displaying a second view of the wiring system in which physical components in the wiring system are displayed in the second view. The third program code, responsive to a user input to a display of the wiring system in one view from the first view and the second view, is for displaying a reaction in another view other than the one view from the first view and the second view based on the user input to the display of the wiring system. The first program code, the second program code, and the third program code are stored on the computer readable storage medium.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is an illustration of a wiring display environment in accordance with an advantageous embodiment;
**Figure 2** is an illustration of a display module in accordance with an advantageous embodiment;
**Figure 3** is an illustration of graphics data in accordance with an advantageous embodiment;
**Figure 4** is an illustration of a first view and a second view of a wiring system in accordance with an
advantageous embodiment;
**Figure 5** is an illustration of interaction between two views of a wiring system in accordance with an advantageous embodiment;
**Figure 6** is another illustration of interaction between two views of a wiring system in accordance with an advantageous embodiment;
**Figure 7** is another illustration of interaction between two views of a wiring system in accordance with an advantageous embodiment;
**Figure 8** is another illustration of interaction between two views of a wiring system in accordance with an advantageous embodiment;
**Figure 9** is an illustration of a flowchart of a process for displaying wiring information in accordance with an advantageous embodiment; and
**Figure 10** is an illustration of a data processing system in accordance with an advantageous embodiment.

### DETAILED DESCRIPTION

The different advantageous embodiments recognize and take into account a number of considerations. "A number", as used herein with reference to items, means one or more items. For example, "a number of considerations" is one or more considerations.

For example, the different advantageous embodiments recognize and take into account that although diagrams of wiring systems may be displayed electronically on a display screen, the amount of information in these diagrams may still increase the time and effort needed by a maintenance person to find information needed by the maintenance person to perform maintenance operations.

For example, a drawing in a schematic diagram may include hundreds of components. Finding a component of interest may take more time and effort than desired by a maintenance person. If the maintenance person is looking for a particular wiring bundle within a wiring system of an aircraft, the time needed to find that particular wiring bundle, trace or locate the wiring bundle, and find the path of the wiring bundle may be more difficult than desired.

The different advantageous embodiments recognize and take into account that one manner in which a particular component may be more easily identified is through the use of graphical indicators. A graphical indicator may be used to highlight the desired wiring bundle when a user input is received selecting the wiring bundle. The different advantageous embodiments recognize and take into account that even with this type of graphical indicator, the drawings may include other information that is not needed by the maintenance operator. The maintenance operator may still need to look for other components related to the wiring bundle to perform an inspection or other maintenance operations.

Thus, the different advantageous embodiments provide a method and apparatus for displaying wiring information.

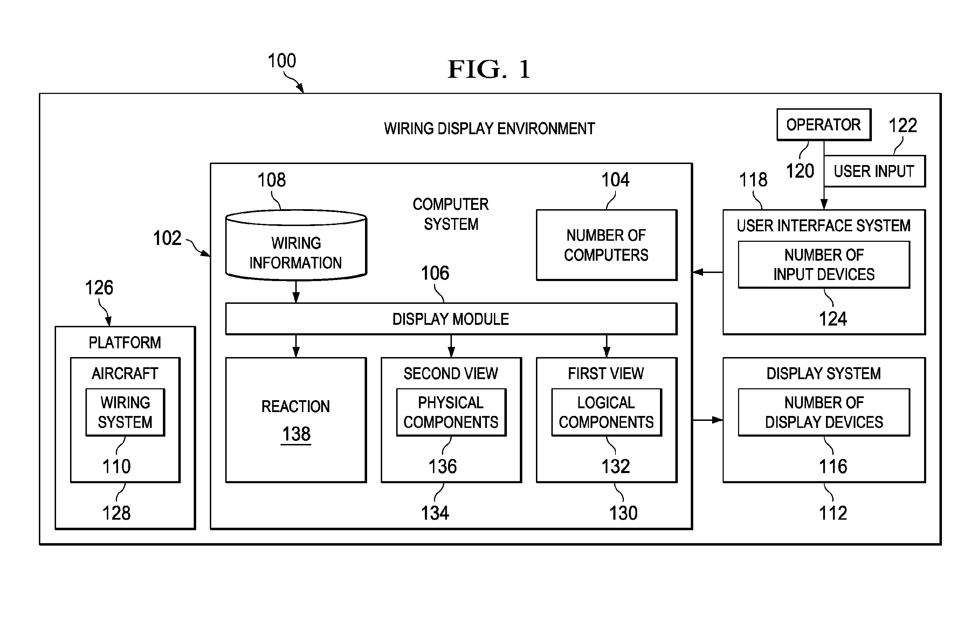

A first view of a wiring system is displayed in which logical components are displayed in the first view. A second view of the wiring system is displayed in which the physical components of the wiring system are displayed in the second view. In response to a user input to the display of the wiring system in one view in one of the first view and second view, a reaction is displayed in another view in the first view and the second view based on the user input to the component. With reference now to the figures and, in particular, with reference now to **Figure 1****,** an illustration of a wiring display environment is depicted in accordance with an advantageous embodiment. In this depicted example, wiring display environment **100** comprises computer system **102.**

Computer system **102** includes number of computers **104.** When more than one computer is present in number of computers **104,** those computers may be in communication with each other through a network, wireless communications links, or other suitable types of communication systems.

In these illustrative examples, display module **106** is located in computer system **102.** Display module **106** may be implemented using software, hardware, or a combination of the two. In these illustrative examples, display module **106** displays wiring information **108** for wiring system **110** in display system **112.** Wiring system **110** is comprised of components. The components may be at least one of modules, line-replaceable units, computers, display devices, lights, wires, connectors, power sources, buses, switches, plugs, brackets, and/or other suitable types of components.

As used herein, the phrase "at least one of", when used with a list of items, means that different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

Display system **112** is a hardware system and may comprise number of display devices **116.** Number of display devices **116** may comprise a liquid crystal display device, a projector, and/or other suitable types of display devices.

Further, user interface system **118** also may be present in computer system **102.** User interface system **118** may be implemented using hardware, software, or a combination of the two. User interface system **118** allows operator **120** to provide user input **122** to interact with display module **106.** User input **122** may be used to manipulate or view wiring information **108.**

In these illustrative examples, user interface system **118** comprises number of input devices **124.** Number of input devices **124** may be, for example, without limitation, at least one of a mouse, a keyboard, a touch screen, a gesture detection system, and other suitable types of input devices.

Wiring system **110,** in these illustrative examples, is in platform **126.** Platform **126** may take various forms. For example, platform **126** may be aircraft **128.**

Wiring system **110** may be, for example, for an entertainment system, an environmental system, and/or other types of systems that may be found within aircraft **128.** In other words, wiring system **110** may be one or more of the different systems through which electricity flows.

In these illustrative examples, display module **106** generates and displays first view **130** of wiring system **110** in which logical components **132** in wiring system **110** are displayed in first view **130.** Additionally, display module **106** generates and displays second view **134** of wiring system **110** in which physical components **136** are displayed in second view **134.**

In these illustrative examples, logical components **132** are logical representations of physical components **136.** Logical components **132** may be displayed as blocks, logic symbols, or graphics. Logical components **132** may represent functions or components without regard to their physical form in the display in first view **130.**

Physical components **136** in second view **134** are physical representations of components in wiring system **110.** In other words, physical components **136** are displayed as graphics of how these components in wiring system **110** would look when viewed in aircraft **128** by operator **120.** In response to user input **122** to the display of wiring system **110** in one view selected from first view **130** and second view **134,** reaction **138** is identified and displayed in another view from first view **130** and second view **134.** Display module **106** generates reaction **138** based on user input **122** to wiring system **110.**

In these illustrative examples, reaction **138** is an alteration of a display of the components in wiring system **110** in the view in which user input **122** was not received. In other words, when user input **122** is made to the display of wiring system **110** in one of the views, reaction **138** is displayed in the other view. In this manner, interaction occurs between first view **130** and second view **134.**

The illustration of wiring display environment **100** in **Figure 1** is not meant to imply physical or architectural limitations to the manner in which an advantageous embodiment may be implemented. Other components in addition to, and/or in place of, the ones illustrated may be used. Some components may be unnecessary. Also, the blocks are presented to illustrate some functional components. One or more of these blocks may be combined and/or divided into different blocks when implemented in an advantageous embodiment.

In some illustrative examples, additional views may be presented. For example, physical components **136** may be displayed in another view in which physical components **136** are displayed in two dimensions rather than three dimensions.

Although an advantageous embodiment has been described with respect to aircraft, the advantageous embodiment may be applied to other types of platforms. For example, without limitation, other advantageous embodiments may be applied to a mobile platform, a stationary platform, a land-based structure, an aquatic-based structure, a space-based structure, and/or some other suitable object. More specifically, the different advantageous embodiments may be applied to, for example, without limitation, a submarine, a bus, a personnel carrier, tank, a train, an automobile, a spacecraft, a space station, a satellite, a surface ship, a power plant, a dam, a manufacturing facility, a building, and/or some other suitable object.

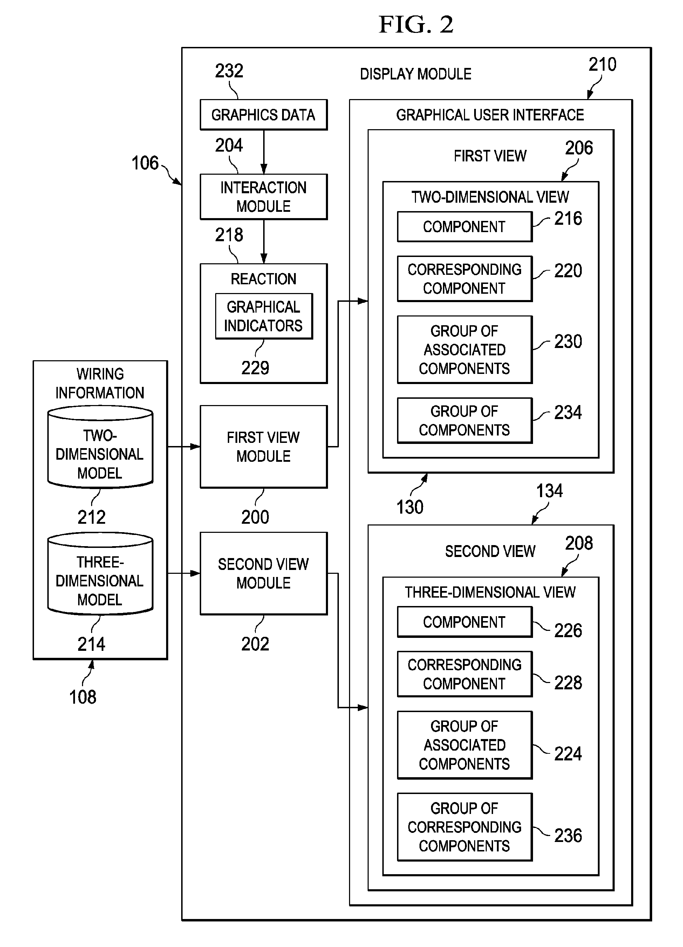

With reference now to **Figure 2****,** an illustration of a display module is depicted in accordance with an advantageous embodiment. As depicted, one example of display module **106** is depicted.

Display module **106,** as illustrated, comprises first view module **200,** second view module **202,** and interaction module **204.** In these illustrative examples, first view module **200** generates first view **130** for display on display system **112** in **Figure 1****.** Second view module **202** generates second view **134** for display on display system **112.**

In these illustrative examples, first view **130** is two-dimensional view **206,** while second view **134** is three-dimensional view **208.** These views are displayed in graphical user interface **210** in these illustrative examples.

Two-dimensional view **206** and three-dimensional view **208** are generated by first view module **200** and second view module **202** using wiring information **108.** Wiring information **108** may be stored in a group of databases.

"A group", as used herein with reference to items, means one or more items. For example, "a group of databases" means one or more databases. In these illustrative examples, wiring information **108** may take the form of computer-aided design (CAD) drawings and/or other suitable information.

In these illustrative examples, wiring information **108** includes two-dimensional model **212** and three-dimensional model **214.** Two-dimensional model **212** contains information needed to generate two-dimensional view **206** of wiring system **110** in **Figure 1****.** Three-dimensional model **214** comprises information needed to generate three-dimensional view **208** of wiring system **110.** These models may take the form of any currently-used models for displaying two-dimensional and three-dimensional drawings on a computer system. For example, the models may be computer-aided design models or other types of models.

In these illustrative examples, two-dimensional view **206** is a graphical representation of components in wiring system **110.** The graphical representation does not include the physical view or details of the components. The representation may be made using blocks, symbols, and/or other graphics. For example, two-dimensional view **206** may display wires, equipment, and/or other components.

Three-dimensional view **208** provides a graphical representation of the physical layout of different components in a physical form. In three-dimensional view **208,** wiring system **110** is displayed with a representation of the physical bundles, wires, and other equipment in three-dimensional space. Three-dimensional view **208** may describe or show the entire path that electrical signals may take from point to point within wiring system **110.** Groupings of components into functionality are not shown in three-dimensional view **208.**

In the illustrative examples, two-dimensional view **206** and three-dimensional view **208** each provide different types of information about wiring system **110.** Two-dimensional view **206** does not include all of the information presented by three-dimensional view **208.** In a similar fashion, three-dimensional view **208** does not provide all of the information seen in two-dimensional view **206.** For example, two-dimensional view **206** may provide information about components, functions, and/or other suitable information.

In contrast, three-dimensional view **208** may provide information about the physical location or routing of components in wiring system **110.** Further, three-dimensional view **208** may provide information about support structures and/or other devices in wiring system **110** that may not have corresponding logical components for display in two-dimensional view **206.** Components, such as wiring bundles, boxes, and connectors in the physical design of wiring system **110** may not be seen in two-dimensional view **206.**

In summary, two-dimensional view **206** provides a graphical representation of components needed to describe a function of a system but has no physical information.

For example, only selected wires may be shown and other connectors and components may not be present in this view depending on the particular implementation. Information about wire gauge, length, physical location, and routing of the wires in wiring bundles are not present in two-dimensional view **206.**

In contrast, three-dimensional view **208** provides a graphical representation of the components in their physical form. Three-dimensional view **208** also may include the location and routing of the different components. For example, a wiring bundle or tube may contain wires from various functions and systems. Three-dimensional view **208** shows this wiring bundle but may not show the wires inside of the wiring bundle. In contrast, two-dimensional view **206** may only show wires for a particular function, depending on the filtering or selection of wiring system **110.**

In other words, a one-to-one correspondence between a component in two-dimensional view **206** and three-dimensional view **208** may not always be present. However, although a one-to-one correspondence may not be present, a correspondence or association between components may still be made. For example, an association between a wire in two-dimensional view **206** may be made with a wiring bundle in three-dimensional view **208.**

In these illustrative examples, interaction module **204** provides interaction between first view **130** and second view **134.** Interaction module **204** may receive user input **122** from operator **120** through number of input devices **124.**

For example, user input **122** to component **216** in two-dimensional view **206** in first view **130** results in reaction **218** being displayed in three-dimensional view **208** in second view **134.** Reaction **218** may take various forms. For example, reaction **218** may be with respect to corresponding component **228** for component **216.** Component **216** may be a wire in two-dimensional view **206.** Corresponding component **228** may be the corresponding wire in three-dimensional view **208.** In particular, reaction **218** may be displayed in graphical user interface **210** in the form of graphical indicators **229.**

In some illustrative examples, if corresponding component **228** is not present in three-dimensional view **208,** then group of associated components **224** may be the subject of reaction **218.**

Reaction **218** may be to associate a graphical indicator from graphical indicators **229** with corresponding component **228** and/or group of associated components **224.** The graphical indicator may be highlighting, changing a color of a component, display of an icon by a component or on a component, bolding of lines, and/or other suitable types of graphical indicators.

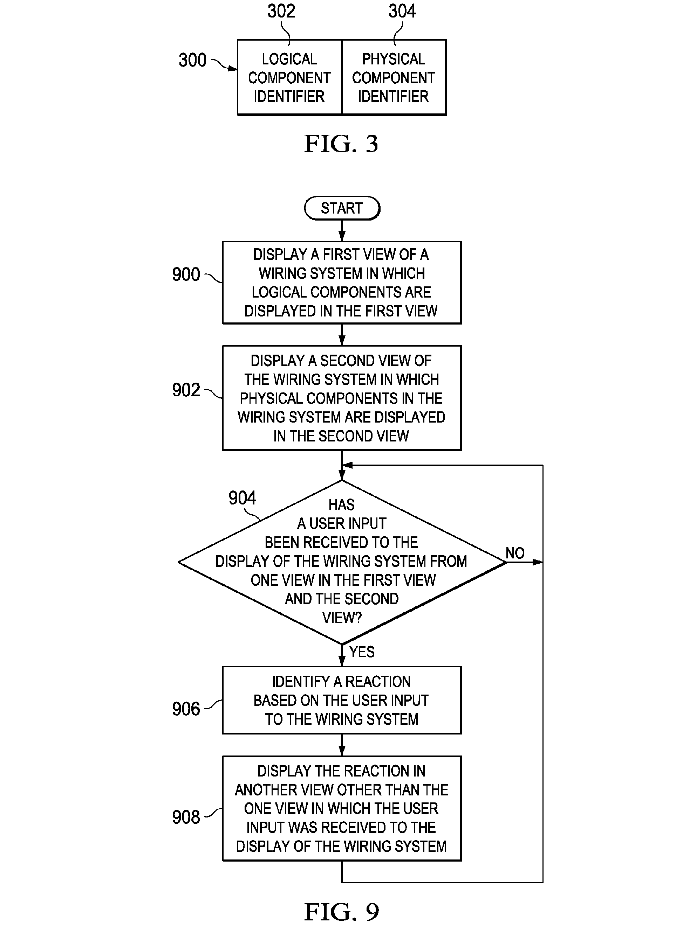

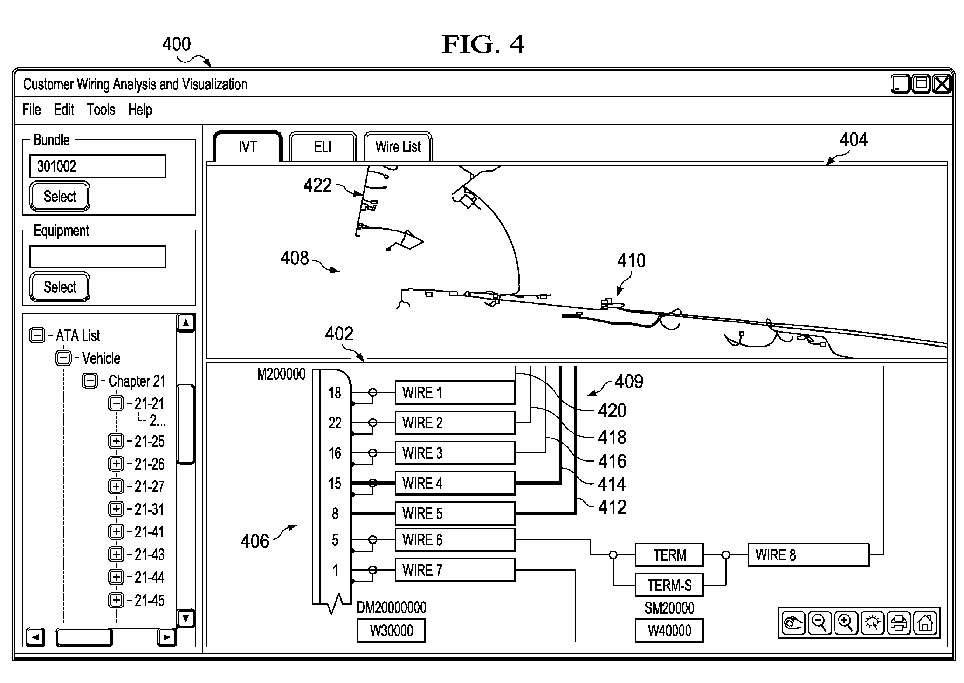

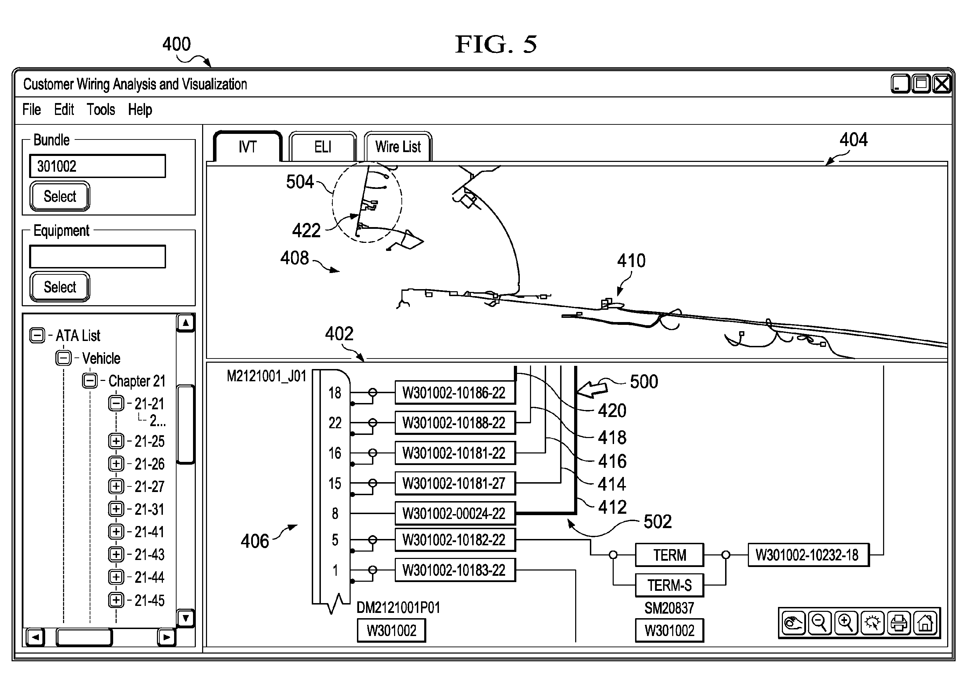

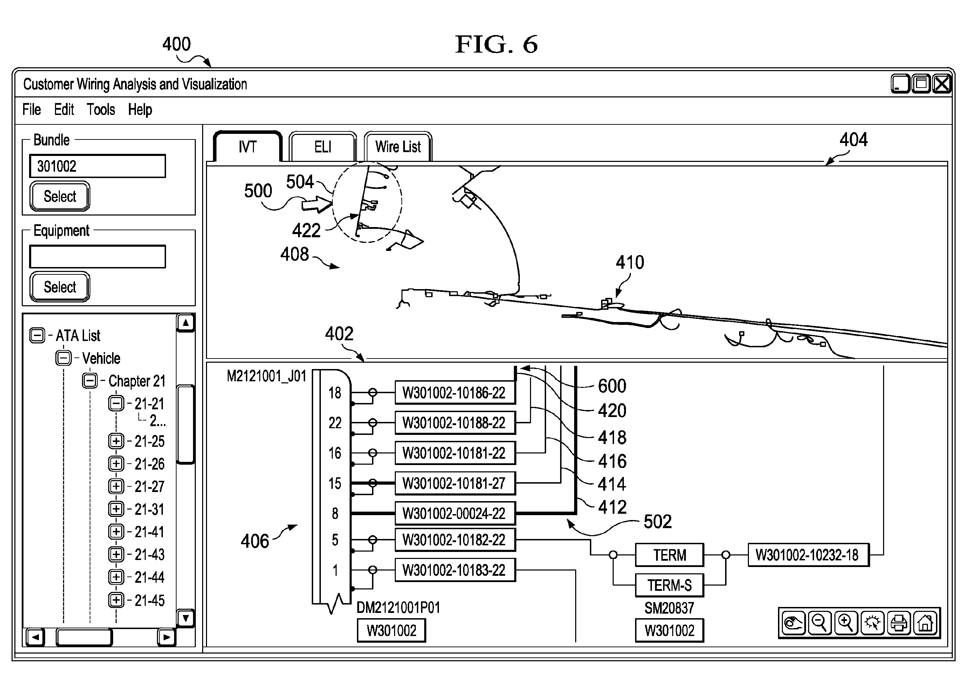

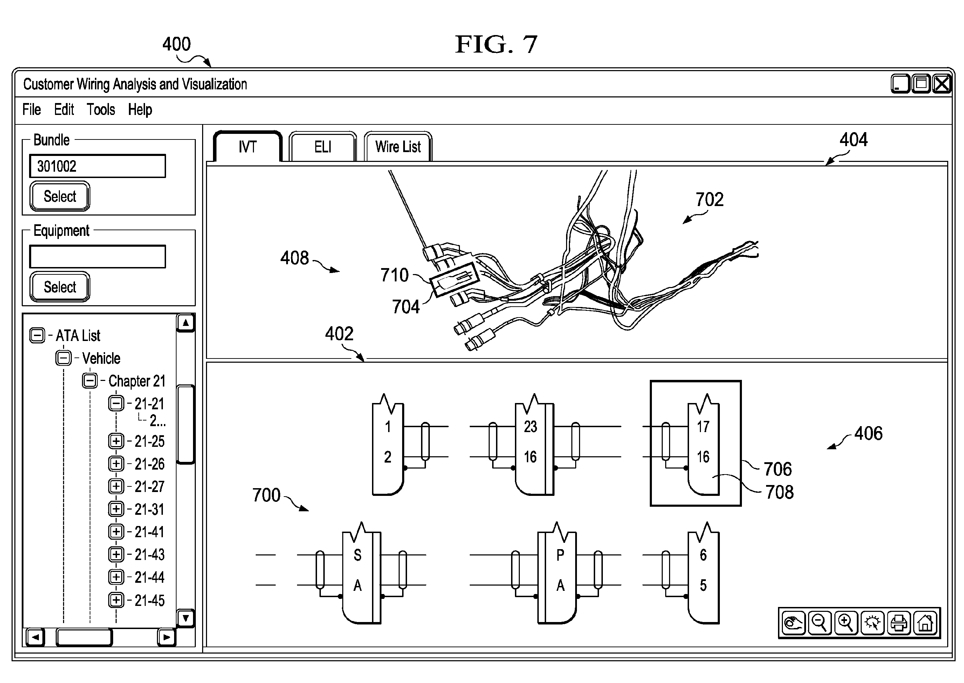

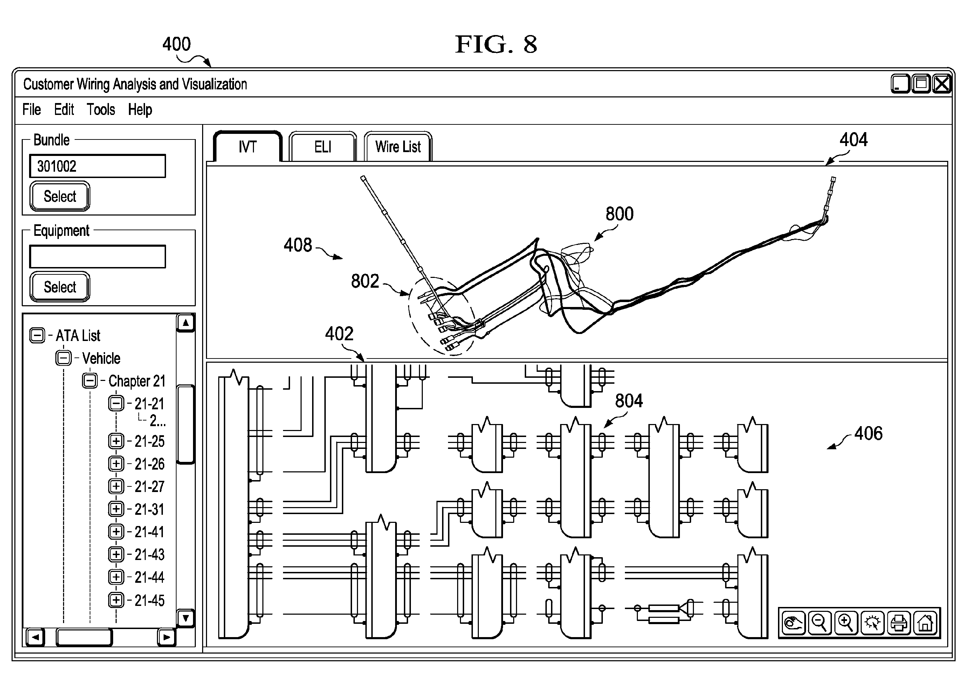

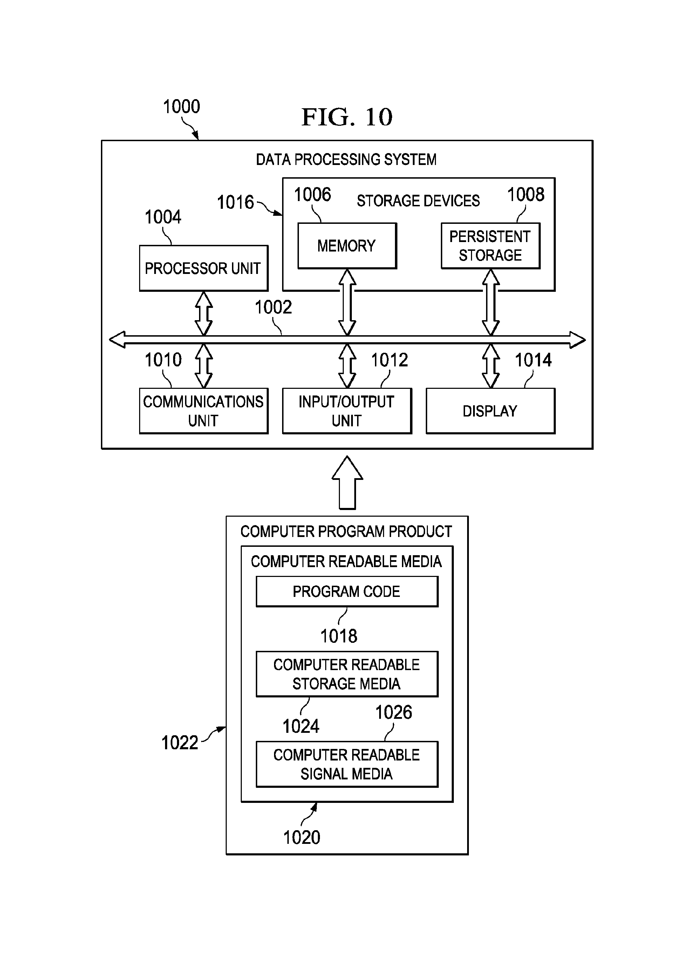

A graphical indicator may be associated with a component in a number of different ways. A graphical indicator is associated with a component when a viewer of graphical user interface **210** knows that the graphical indicator is for the particular component.
For example, group of associated components **224** may be a wiring bundle if the wire selected in two-dimensional view **206** is not shown in three-dimensional view **208.** With the selection of the wire as component **216,** the wiring bundle in which component **216** is located is displayed in association with a graphical indicator. In this example, the wiring bundle is corresponding component **228.**
In a similar fashion, if the user input to wiring system **110** is to select component **226** in three-dimensional view **208,** reaction **218** may be highlighting of corresponding component **220** and/or group of associated components **230** in two-dimensional view **206.**
In this example, the selection of a wiring bundle for component **226** may result in one or more wires being highlighted in two-dimensional view **206** as group of associated components **230.** The wires are associated with the bundle because they are located in the wiring bundle in this illustrative example. As discussed above, this association of components may be made using graphics data **232.**
In still other illustrative examples, the user input to wiring system **110** may be to a group of components. For example, user input **122** may be to select or filter two-dimensional view **206** to only show a portion of wiring system **110.** This filtering may be to show portions of wiring system **110** for a particular function and/or system in wiring system **110.**
For example, if wiring system **110** is for all of aircraft **128,** the selection of group of components **234** in two-dimensional view **206** may be for components in the environmental system within the wiring system. In a similar fashion, group of corresponding components **236** displayed in three-dimensional view **208** will result in showing only those components selected for the environmental system in two-dimensional view **206.**
As another illustrative example, if the selection of group of components **234** in two-dimensional view **206** are for an entertainment system, then reaction **218** in three-dimensional view **208** is to display group of associated components **224** that include the components for the entertainment system. Of course, other types of filtering may be used depending on the particular implementation.
In these illustrative examples, the association between logical components **132** displayed in two-dimensional view **206** and physical components **136** displayed in three-dimensional view **208** is made using graphics data **232.** Graphics data **232** provides an association between the different components in two-dimensional model **212** and three-dimensional model **214.**
As discussed above, this correspondence may not be component to component, but in some cases, a component may correspond to a group of components or a different component. In other cases, a group of components may correspond to a single component. For example, a wire may correspond to a wiring bundle while a bundle may correspond to a group of wires.
With reference now to **Figure 3****,** an illustration of graphics data is depicted in accordance with an advantageous embodiment. In this illustrative example, entry **300** is an example of a record or entry in graphics data **232** in **Figure 2****.** As can be seen, entry **300** comprises logical component identifier **302** and physical component identifier **304.**
When one component is selected, the other component is identified in entry **300.** The course of the component may not be a corresponding component but may be a group of components associated with the selected component.
For example, if logical component identifier **302** is for a wire, physical component identifier **304** may be for a wire or a wiring bundle in which the wire is located in the corresponding three-dimensional model.
These identifiers correspond to components in two-dimensional model **212** in wiring information **108** in **Figure 2****.** Physical component identifier **304** corresponds to three-dimensional model **214** in wiring information **108** in **Figure 2****.**
Logical component identifier **302** may be an identifier used for the component in two-dimensional model **212.** Physical component identifier **304** may correspond to an identifier used for the component in three-dimensional model **214.** Thus, when particular components in the models are selected in the views, the identifier for the selected component may be used to identify the corresponding component or group of components in the other model.
With reference now to **Figure 4****,** an illustration of a first view and a second view of a wiring system is depicted in accordance with an advantageous embodiment. Graphical user interface **400** is an example of one implementation of graphical user interface **210** shown in block form in **Figure 2****.** In this illustrative example, graphical user interface **400** includes first view **402** and second view **404.** First view **402** takes the form of two-dimensional view **406,** while second view **404** takes the form of three-dimensional view **408.**
In these illustrative examples, first view **402** is an example of one implementation of first view **130** shown in block form in **Figure 1****.** Second view **404** is an example of one implementation of second view **134** shown in block form in **Figure 1****.**
In these illustrative examples, two-dimensional view **406** and three-dimensional view **408** are generated by display module **106** and displayed on display system **112** within computer system **102** in **Figure 1****.** In these illustrative examples, logical components **409** are displayed in two-dimensional view **406.** Physical components **410** in wiring system **110** are displayed in three-dimensional view **408.** In these illustrative examples, some or all of logical components **409** may correspond to some or all of physical components **410.** In some cases, some components illustrated in one view may not be present in another view.
For example, wires **412, 414, 416, 418,** and **420** are present in wiring bundle **422.** Wires **412, 414, 416, 418,** and **420** are individually shown in two-dimensional view **406.** However, these wires are not individually shown in three-dimensional view **408.** Instead, only wiring bundle **422** is illustrated in three-dimensional view **408.** Two-dimensional view **406** is not shown in second view **404.** Instead, an associated component for wire **412** is displayed. In this example, wiring bundle **422** is a component in three-dimensional view **408** that contains wire **412.**
In this illustrative example, a selection of a logical component in logical components **409** in two-dimensional view **406** causes a display of a graphical indicator to identify the corresponding physical component in physical components **410** in three-dimensional view **408.** Similarly, a selection of a physical component in physical components **410** causes a display of a graphical indicator to identify the corresponding logical component in logical components **409** in two-dimensional view **406.**
As depicted in this example, the graphical indicators used may include highlighting, a color, and/or other suitable types of graphical indicators. Other examples of graphical indicators include, for example, without limitation, shading, a pattern, a box, a circle, a dashed outline around a component, a balloon, and/or other suitable types of graphical indicators.
With reference now to **Figure 5****,** an illustration of interaction between two views of a wiring system is depicted in accordance with an advantageous embodiment. In this illustrative example, pointer **500** has been moved over wire **412,** and wire **412** has been selected by user input **122.**
In response to a selection of wire **412,** graphical indicator **502** is associated with wire **412.** In this example, graphical indicator **502** is a thicker line displayed for wire **412.** Of course, other types of graphical indicators may be used, such as highlighting, color, flashing, graphics, an icon, and/or other suitable types of indicators.
In addition, wiring bundle **422** is also highlighted in this illustrative example. The reaction in this example is an association of graphical indicator **504** with wiring bundle **422.** In this example, graphical indicator **504** is a dashed line. Wiring bundle **422** corresponds to the wiring bundle in which wire **412** is located.
With reference now to **Figure 6****,** another illustration of interaction between two views of a wiring system is depicted in accordance with an advantageous embodiment. In this illustrative example, pointer **500** has been moved over wiring bundle **422.** Additionally, wiring bundle **422** has been selected.
In response to a selection of wiring bundle **422,** wiring bundle **422** is associated with graphical indicator **504.** Additionally, wires ............**412** and **420** are also associated with graphical indicators.
In particular, wire **412** is associated with graphical indicator **502** and wire **420** is associated with graphical indicator **600.** Both graphical indicator **502** and graphical indicator **600** are thicker lines for the display of wire **412** and wire **420,** respectively. These wires are associated with graphical indicators **502** and **600** as a reaction to the selection of wiring bundle **422.** These wires are inside of wiring bundle **422** in the depicted examples.
As depicted, wires **414, 416,** and **418** are not associated with the graphical indicator in this illustrative example. Although these wires are part of the same function, they are not present inside of wiring bundle **422** in this example. These wires are located in other wiring bundles or in other locations in these illustrative examples.
The illustration of graphical user interface **400** with two-dimensional view **406** and three-dimensional view **408** is not meant to imply limitations to the manner in which different advantageous embodiments may be implemented. For example, graphical user interface **400** displays two-dimensional view **406** and three-dimensional view **408** in a single window. In other illustrative examples, each view may be displayed in a separate window. Further, graphical indicators are associated with the components in this example. In particular, one graphical indicator is associated with each component.
In other illustrative examples, multiple graphical indicators may be used. For example, highlighting and flashing, color and line thickness, dashed lines and icons, and/or other suitable types of combinations of graphical indicators may be used. In other words, any type or number of graphical indicators may be used with the components to identify the components that correlate with each other in the two different views.
With reference now to **Figure 7****,** another illustration of interaction between two views of a wiring system is depicted in accordance with an advantageous embodiment. In this illustrative example, logical components **700** are displayed in two-dimensional view **406** in graphical user interface **400.** Physical components **702** are displayed in three-dimensional view **408.**
As depicted, in this illustrative example, a selection of physical component **704** in three-dimensional view **408** causes a display of graphical indicator **706** in two-dimensional view **406.** Graphical indicator **706** identifies logical component **708** as corresponding to physical component **704.** Graphical indicator **706** takes the form of a box around logical component **708** in this illustrative example.
Similarly, a selection of logical component **708** causes a display of graphical indicator **710** in three-dimensional view **408.** Graphical indicator **710** identifies physical component **704** as corresponding to logical component **708.** In this illustrative example, graphical indicator **710** takes the form of a pattern for physical component **704.** In this manner, two-dimensional view **406** and three-dimensional view **408** may interact with each other. In some illustrative examples, a selection of a logical component in logical components **700** in two-dimensional view **406** may cause a number of graphical indicators that identify one or more physical components associated with the logical component.
With reference now to **Figure 8****,** another illustration of interaction between two views of a wiring system is depicted in accordance with an advantageous embodiment. In this illustrative example, physical components **800** are displayed in two-dimensional view **406.**
Physical components **800** are for a wiring system. In this depicted example, a selection of a portion of physical components **800** in three-dimensional view **408** filters which logical components for the system are displayed in two-dimensional view **406.** In particular, the selection of portion **802** of physical components **800** in three-dimensional view **408** filters the logical components for the system such that only logical components **804** are displayed in two-dimensional view **406.**
The illustration of graphical user interface **400** with two-dimensional view **406** and three-dimensional view **408** is not meant to imply limitations to the manner in which different advantageous embodiments may be implemented. For example, graphical user interface **400** displays two-dimensional view **406** and three-dimensional view **408** in a single window. In other illustrative examples, each view may be displayed in a separate window. Further, graphical indicators are associated with the components in this example. In particular, one graphical indicator is associated with each component.
In other illustrative examples, multiple graphical indicators may be used. For example, highlighting and flashing, color and line thickness, dashed lines and icons, and/or other suitable types of combinations of graphical indicators may be used. In other words, any type or number of graphical indicators may be used with the components to identify the components that correlate with each other in the two different views.
With reference now to **Figure 9****,** an illustration of a flowchart of a process for displaying wiring information is depicted in accordance with an advantageous embodiment. The process illustrated in **Figure 9** may be implemented in display module **106** in **Figure 1****.**
The process begins by displaying a first view of a wiring system in which logical components are displayed in the first view (operation **900).** Thereafter, the process displays a second view of the wiring system in which physical components in the wiring system are displayed in the second view (operation **902).**
The process then determines whether a user input has been received to the display of the wiring system from one view in the first view and the second view (operation **904).** In one illustrative example, the user input is a selection of a component. In another example, the user input may be to filter the view for a particular function and/or system. In some cases, the user input may be to filter the view by a location of installation, a designer of the system, a date of installation, a presence of metadata for a particular part, and/or other suitable criteria.
If a user input has not been received, the process returns to operation **904.** Otherwise, the process identifies a reaction based on the user input to the wiring system (operation **906).** Operation **906** identifies a number of components in the other view. The other view is the view in which the user input was not received. If the user input was a selection of a component, the number of components is a component corresponding to the component selected. In contrast, if a corresponding component is not present, then a group of components associated with the selected component may be identified. The process then displays the reaction in another view other than the one view in which the user input was received to the display of the wiring system (operation **908),** with the process then returning to operation **904.** The flowcharts and block diagrams in the different depicted embodiments illustrate the architecture, functionality, and operation of some possible implementations of apparatus and methods in an advantageous embodiment. In this regard, each block in the flowchart or block diagrams may represent a module, segment, function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams.
In some alternative implementations of an advantageous embodiment, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.
Turning now to **Figure 10****,** an illustration of a data processing system is depicted in accordance with an advantageous embodiment. In this illustrative example, data processing system **1000** includes communications fabric **1002** which provides communications between processor unit **1004,** memory **1006,** persistent storage **1008,** communications unit **1010,** input/output (I/O) unit **1012,** and display **1014.** Data processing system **1000** may be used to implement one or more of number of computers **104** in computer system **102** in these illustrative examples.
Processor unit **1004** serves to execute instructions for software that may be loaded into memory **1006.** Processor unit **1004** may be a number of processors, a multi-processor core, or some other type of processor, depending on the particular implementation. A number, as used herein with reference to an item, means one or more items. Further, processor unit **1004** may be implemented using a number of heterogeneous processor systems in which a main processor is present with secondary processors on a single chip. As another illustrative example, processor unit **1004** may be a symmetric multi-processor system containing multiple processors of the same type.
Memory **1006** and persistent storage **1008** are examples of storage devices **1016.** A storage device is any piece of hardware that is capable of storing information, such as, for example, without limitation, data, program code in functional form, and/or other suitable information either on a temporary basis and/or a permanent basis. Storage devices **1016** may also be referred to as computer readable storage devices in these examples. Memory **1006,** in these examples, may be, for example, a random access memory or any other suitable volatile or non-volatile storage device. Persistent storage **1008** may take various forms, depending on the particular implementation.
For example, persistent storage **1008** may contain one or more components or devices. For example, persistent storage **1008** may be a hard drive, a flash memory, a rewritable optical disk, a rewritable magnetic tape, or some combination of the above. The media used by persistent storage **1008** also may be removable. For example, a removable hard drive may be used for persistent storage **1008.**
Communications unit **1010,** in these examples, provides for communications with other data processing systems or devices. In these examples, communications unit **1010** is a network interface card. Communications unit **1010** may provide communications through the use of either or both physical and wireless communications links.
Input/output unit **1012** allows for input and output of data with other devices that may be connected to data processing system **1000.** For example, input/output unit **1012** may provide a connection for user input through a keyboard, a mouse, and/or some other suitable input device. Further, input/output unit **1012** may send output to a printer. Display **1014** provides a mechanism to display information to a user.
Instructions for the operating system, applications, and/or programs may be located in storage devices **1016,** which are in communication with processor unit **1004** through communications fabric **1002.** In these illustrative examples, the instructions are in a functional form on persistent storage **1008.** These instructions may be loaded into memory **1006** for execution by processor unit **1004.** The processes of the different embodiments may be performed by processor unit **1004** using computer implemented instructions, which may be located in a memory, such as memory **1006.**
These instructions are referred to as program code, computer usable program code, or computer readable program code that may be read and executed by a processor in processor unit **1004.** The program code in the different embodiments may be embodied on different physical or computer readable storage media, such as memory **1006** or persistent storage **1008.**
Program code **1018** is located in a functional form on computer readable media **1020** that is selectively removable and may be loaded onto or transferred to data processing system **1000** for execution by processor unit **1004.** Program code **1018** and computer readable media **1020** form computer program product **1022** in these examples. In one example, computer readable media **1020** may be computer readable storage media **1024** or computer readable signal media **1026.**
Computer readable storage media **1024** may include, for example, an optical or magnetic disk that is inserted or placed into a drive or other device that is part of persistent storage **1008** for transfer onto a storage device, such as a hard drive, that is part of persistent storage **1008.** Computer readable storage media **1024** also may take the form of a persistent storage, such as a hard drive, a thumb drive, or a flash memory, that is connected to data processing system **1000.** In some instances, computer readable storage media **1024** may not be removable from data processing system **1000.**
In these examples, computer readable storage media **1024** is a physical or tangible storage device used to store program code **1018** rather than a medium that propagates or transmits program code **1018.** Computer readable storage media **1024** is also referred to as a computer readable tangible storage device or a computer readable physical storage device. In other words, computer readable storage media **1024** is a media that can be touched by a person.
Alternatively, program code **1018** may be transferred to data processing system **1000** using computer readable signal media **1026.** Computer readable signal media **1026** may be, for example, a propagated data signal containing program code **1018.** For example, computer readable signal media **1026** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.
In some advantageous embodiments, program code **1018** may be downloaded over a network to persistent storage **1008** from another device or data processing system through computer readable signal media **1026** for use within data processing system **1000.** For instance, program code stored in a computer readable storage medium in a server data processing system may be downloaded over a network from the server to data processing system **1000.** The data processing system providing program code **1018** may be a server computer, a client computer, or some other device capable of storing and transmitting program code **1018.** The different components illustrated for data processing system **1000** are not meant to provide architectural limitations to the manner in which different embodiments may be implemented. The different advantageous embodiments may be implemented in a data processing system including components in addition to or in place of those illustrated for data processing system **1000.** Other components shown in **Figure 10** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.
In another illustrative example, processor unit **1004** may take the form of a hardware unit that has circuits that are manufactured or configured for a particular use. This type of hardware may perform operations without needing program code to be loaded into a memory from a storage device to be configured to perform the operations.
For example, when processor unit **1004** takes the form of a hardware unit, processor unit **1004** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **1018** may be omitted because the processes for the different embodiments are implemented in a hardware unit.
In still another illustrative example, processor unit **1004** may be implemented using a combination of processors found in computers and hardware units. Processor unit **1004** may have a number of hardware units and a number of processors that are configured to run program code **1018.** With this depicted example, some of the processes may be implemented in the number of hardware units, while other processes may be implemented in the number of processors. In another example, a bus system may be used to implement communications fabric **1002** and may be comprised of one or more buses, such as a system bus or an input/output bus. Of course, the bus system may be implemented using any suitable type of architecture that provides for a transfer of data between different components or devices attached to the bus system.
Additionally, a communications unit may include a number of more devices that transmit data, receive data, or transmit and receive data. A communications unit may be, for example, a modem or a network adapter, two network adapters, or some combination thereof. Further, a memory may be, for example, memory **1006,** or a cache, such as found in an interface and memory controller hub that may be present in communications fabric **1002.**
Thus, the different advantageous embodiments provide a method and apparatus for displaying wiring information. With one or more of the different advantageous embodiments, an operator may more easily obtain information about wiring systems in different platforms. With the interaction between the first view and the second view, an operator may more easily see information needed.
In these illustrative examples, the first view is a two-dimensional view of the wiring system while the second view is a three-dimensional view of the wiring system.
By selecting one or more components in the two-dimensional view, those corresponding components in the three-dimensional view may be seen. In some cases, the corresponding components may not be present and an associated component may be displayed. This association may be, for example, a wiring bundle for a wire in the three-dimensional view.
In some illustrative examples, selecting one or more components in the two-dimensional view may cause additional components to be seen in the three-dimensional view. For example, additional components, such as equipment, location information, and/or spatial information may be provided in the three-dimensional view.
Further, in this manner, an operator may be able to identify the location and positioning of different components in the platform after finding the components of interest based on the function or other information in the two-dimensional view. In a similar fashion, when a component is identified in the platform, the three-dimensional view may be used to select that component to find other information about the components in the two-dimensional view.
The description of the different advantageous embodiments has been presented for purposes of illustration and description and is not intended to be exhaustive or limited to the embodiments in the form disclosed. Many modifications and variations will be apparent to those of ordinary skill in the art.
For example, although the advantageous embodiments have been described with respect to a wiring system, some advantageous embodiments may be applied to other types of systems. These systems may be systems in which a flow is present. For example, the flow may be air, gas, light, water, oil, fuel, a hydraulic fluid, and/or other suitable elements that may flow. These systems may include, for example, a fuel system, a hydraulic system, an environmental system, an air handling system, an oil system, and/or other suitable types of systems. The different advantageous embodiments may be applied to provide a first view and a second view with interactions between the first view and the second view.
Further, these systems may be located on other platforms other than an aircraft. For example, these systems may be located on a submarine, a bus, a personnel carrier, tank, a train, an automobile, a spacecraft, a space station, a satellite, a surface ship, a power plant, a dam, a manufacturing facility, a building, and/or some other suitable object.
The application of the different advantageous embodiments to these different types of systems may take into account differences present between the types of systems. For example, the manner in which routing and rules for a wiring system are different from a hydraulic system are defined may be taken into account in applying the different advantageous embodiments to a hydraulic system. In these illustrative examples, the different type of systems transports different types of things. For example, wiring system diagrams show the transport of electricity. The electricity may be electrical signals that encode information. In other cases, the electricity may supply power to different devices. As such, these systems use switches, signals, and connections that facilitate the transmission and transport of this type of content.
Other system diagrams, such as hydraulic systems show transport physical elements such as hydraulic fluids. This type of system does not carry multiple groups of elements, and the transport medium does not contain information as in wiring systems. However, the control mechanisms shown in these systems are designed with physical control elements, such as motors, pumps, valves, and actuators. Finally, these system types may also include wiring-based systems to effect the system controls. The manner in which interaction between views of these systems may be implemented may take into account these and possibly other differences between the systems. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.
The following is also disclosed:
An apparatus comprising:
   a computer system configured to display a first view of a wiring system in which logical components are displayed in the first view; display a second view of the wiring system in which physical components in the wiring system are displayed in the second view; and responsive to a user input to a display of the wiring system in one view from the first view and the second view, display a reaction in another view other than the one view from the first view and the second view based on the user input to the display of the wiring system.
Optionally, the apparatus wherein the user input is a selection of a wiring bundle in the second view and the reaction is a display of graphical indicators in association with wires in the wiring bundle in the second view.
Optionally, the apparatus wherein the user input is a selection of a number of components in the first view for display from the wiring system on the first view without other components in the wiring system and the reaction is a display of components corresponding to the number of components in the second view without other components in the second view.
Optionally, the apparatus wherein the first view provides first information about the wiring system that is absent from the second view and the second view provides second information about the wiring system that is absent from the second view.
Optionally, the apparatus wherein the wiring system is located in an aircraft and wherein in being configured to display the second view of the wiring system (110) in which the physical components in the wiring system are displayed in the second view, the computer system is configured to display the second view of the wiring system in which the physical components in the wiring system are graphically displayed with respect to locations of the physical components in the aircraft in the second view.
Also disclosed is:
A computer program product comprising:
   a computer readable storage medium;
   first program code for displaying a first view of a wiring system in which logical components are displayed in the first view;
   second program code for displaying a second view of the wiring system in which physical components in the wiring system are displayed in the second view; and third program code, responsive to a user input to a display of the wiring system in one view from the first view and the second view, for displaying a reaction in another view other than the one view from the first view and the second view based on the user input to the display of the wiring system, wherein the first program code, the second program code, and the third program code are stored on the computer readable storage medium.

## Claims

1. A method for displaying wiring information (108), the method comprising:
displaying a first view (130) of a wiring system (110) in which logical components (132) are displayed in the first view (130);
displaying a second view (134) of the wiring system (110) in which physical components (136) in the wiring system (110) are displayed in the second view (134); and
responsive to a user input (122) to a display of the wiring system (110) in one view from the first view (130) and the second view (134), displaying a reaction (138) in another view other than the one view from the first view (130) and the second view (134) based on the user input (122) to the display of the wiring system (110).

2. The method of claim 1, wherein displaying the first view (130) of the wiring system (110) in which the logical components (132) are displayed in the first view (130) comprises:
displaying the first view (130) of the wiring system (110) in which the logical components (132) are displayed in the first view (130) in two dimensions.

3. The method of claim 1, wherein displaying the second view (134) of the wiring system (110) in which the physical components (136) in the wiring system (110) are displayed in the second view (134) comprises:
displaying the second view (134) of the wiring system (110) in which the physical components (136) in the wiring system (110) are displayed in the second view (134) in three dimensions.

4. The method of claim 1, wherein the reaction (138) comprises alteration of a display of a number of components in the another view other than the one view from the first view (130) and the second view (134) based on the user input (122) to the display of the wiring system (110).

5. The method of claim 1, wherein the user input (122) is a selection of a wire in the first view (130) and the reaction (138) is a display of a graphical indicator in association with a wiring bundle containing the wire in the second view (134).

6. The method of claim 1, wherein the user input (122) is a selection of a wiring bundle in the second view (134) and the reaction (138) is a display of graphical indicators in association with wires in the wiring bundle in the second view (134).

7. The method of claim 1, wherein the user input (122) is a selection of a number of components in the first view (130) for display from the wiring system (110) on the first view (130) without other components in the wiring system (110) and the reaction (138) is a display of components corresponding to the number of components in the second view (134) without other components in the second view (134).

8. The method of claim 1, wherein the first view (130) provides first information about the wiring system (110) that is absent from the second view (134) and the second view (134) provides second information about the wiring system (110) that is absent from the second view (134).

9. The method of claim 1, wherein the wiring system (110) is located in an aircraft (128).

10. The method of claim 9, wherein displaying the second view (134) of the wiring system (110) in which the physical components (136) in the wiring system (110) are displayed in the second view (134) comprises:
displaying the second view (134) of the wiring system (110) in which the physical components (136) in the wiring system (110) are graphically displayed with respect to locations of the physical components (136) in the aircraft (128) in the second view (134).

11. An apparatus comprising:
a computer system (102) configured to display a first view (130) of a wiring system (110) in which logical components (132) are displayed in the first view (130); display a second view (134) of the wiring system (110) in which physical components (136) in the wiring system (110) are displayed in the second view (134); and responsive to a user input (122) to a display of the wiring system (110) in one view from the first view (130) and the second view (134), display a reaction (138) in another view other than the one view from the first view (130) and the second view (134) based on the user input (122) to the display of the wiring system (110).

12. The apparatus of claim 11, wherein in being configured to display the first view (130) of the wiring system (110) in which the logical components (132) are displayed in the first view (130), the computer system (102) is configured to display the first view (130) of the wiring system (110) in which the logical components (132) are displayed in the first view (130) in two dimensions.

13. The apparatus of claim 11, wherein in being configured to display the second view (134) of the wiring system (110) in which the physical components (136) in the wiring system (110) are displayed in the second view (134), the computer system (102) is configured to display the second view (134) of the wiring system (110) in which the physical components (136) in the wiring system (110) are displayed in the second view (134) in three dimensions.

14. The apparatus of claim 11, wherein the reaction (138) comprise alteration of a display of a number of components in the another view other than the one view from the first view (130) and the second view (134) based on the user input (122) to the display of the wiring system (110).

15. The apparatus of claim 11, wherein the user input (122) is a selection of a wire in the first view (130) and the reaction (138) is a display of a graphical indicator in association with a wiring bundle containing the wire in the second view (134).
